# EUROPÄISCHE PATENTSCHRIFT

(11) **EP 1 206 682 B1**
(45) Veröffentlichungstag und Bekanntmachung des Hinweises auf die Patenterteilung: **19.03.2008**
(21) Anmeldenummer: 01943350.7
(22) Anmeldetag: 11.05.2001
(51) Int. Cl.: G01C 19/72

(54) **LICHTLEITFASERSPULE FÜR EINE FASEROPTISCHE MESSEINRICHTUNG UND VERFAHREN ZU DEREN HERSTELLUNG**
FIBER OPTIC COIL FOR A FIBER OPTIC MEASURING SYSTEM AND METHOD FOR PRODUCING THE SAME
BOBINE DE FIBRE OPTIQUE POUR DISPOSITIF DE MESURE A FIBRE OPTIQUE, ET SON PROCEDE DE PRODUCTION

(30) Priorität: 11.07.2000 DE 10033541
(43) Veröffentlichungstag der Anmeldung: 22.05.2002
(73) Patentinhaber: LITEF GmbH, 79115 Freiburg (DE)
(72) Erfinder: BÜSCHELBERGER, Hanns, J., 79199 Kirchzarten (DE); MÜLLER, Hans, G., 79258 Hartheim (DE); RUH, Felix, 79110 Freiburg (DE); VÖLKER, Claus, 79286 Glottertal (DE); WEINER, Anja, 79336 Herbolzheim (DE)
(74) Vertreter: Müller, Frithjof E.
(86) Internationale Anmeldenummer: PCT/EP2001/005414
(87) Internationale Veröffentlichungsnummer: WO 2002/004892

(56) Entgegenhaltungen:
- DE-A- 3 632 730
- US-A- 4 856 900
- DYOTT R B: "Reduction of the Shupe effect in fibre optic gyros;the random-wound coil" ELECTRONICS LETTERS, IEE STEVENAGE, GB, Bd. 32, Nr. 23, 7. November 1996 (1996-11-07), Seiten 2177-2178, XP006005915 ISSN: 0013-5194 in der Anmeldung erwähnt

## Beschreibung

Die Erfindung betrifft eine Lichtleitfaserspule für eine faseroptische Messeinrichtung, insbesondere ein faseroptisches Sagnac-Interferometer, sowie ein Verfahren zu deren Herstellung.

Lichtleitfaserspulen für faseroptische Messeinrichtungen, insbesondere Sensorspulen für Sagnac-Interferometer wie faseroptische Drehratensensoren, haben die Aufgabe eine optische Phasenverschiebung zwischen zwei sich darin gegenläufig ausbreitenden Lichtwellen gemäß der Lehre des Sagnac-Effekts aufzunehmen und deren Messung mittels einer fotoelektrischen Messeinrichtung zu ermöglichen. Messvorrichtungen dieser Art sind bekannt und werden allgemein und so auch nachfolgend kurz als Interferometer und im genannten engeren Sinn als Faserkreisel bezeichnet.

Das Messsignal eines solchen Interferometers ist in der Praxis durch störende Nebeneffekte überlagert. Insbesondere nichtreziproke Veränderungen des Lichtwegs innerhalb der Faserspule führen zu Nullpunktverschiebungen des Interferometers und damit zu Fehlmessungen beispielsweise des Drehratensensors. Besonders ist hier eine Empfindlichkeit gegen Temperaturtransienten entlang der Lichtleitfaser zu nennen. Dieser Effekt wird nach seinem Entdecker als Shupe-Effekt bezeichnet (vergleiche Shupe: Appl. Opt. 19(5), Seiten 654-655 (1980)). Während einer Veränderung der Umgebungstemperatur und daraus folgend einer Änderung des Temperaturverlaufs innerhalb der Lichtleitfaser tritt ein zur Temperaturänderungsgeschwindigkeit proportionaler Nullpunktfehler auf, der für Drehratensensoren zumindest ab einer gewissen Güteklasse zu nicht akzeptablen Ungenauigkeiten führt.

Es wurde bereits eine Reihe von Maßnahmen beschrieben oder vorgeschlagen, um die erwähnte Auswirkung von Temperaturänderungen gering zu halten. Kernansatz dieser Maßnahmen war in der Regel die Wärmeleitung in der Lichtleitfaser der Sensorspule symmetrisch zu gestalten. Die theoretische Beschreibung des Shupe-Effekts lehrt nämlich, dass der Reziprozitätsfehler nur dann auftritt, wenn Teilstrecken, die einen gleichen Abstand von der Mitte der gesamten Lichtleitfaserlänge haben, ungleichen Temperatureinflüssen unterliegen. Diese Erkenntnis hat zu konstruktiven Maßnahmen geführt, die Anordnung der zu einer Spule aufgewickelten Lichtleitfaser mit der größtmöglichen thermischen Symmetrie auszulegen. Bekanntgeworden ist vor allem die sogenannte Quadrupol-Wickeltechnik (vergleiche Bergh: G.L. Report Nr. 3586, Stanford University 1983, US 4,781,461, US 4,856,900, JP-Patent Abstracts of Japan: 63-33612 A, P-727, 8. Juli 1988, Band 12, Nr. 240 und 1-305310 A, P-1012, 23. Februar 1990, Band 14, Nr. 101) oder die sogenannte Oktupol-Wickeltechnik (vergleiche EP 0 614 518). Bei diesen Wickeltechniken werden die Windungen der Lichtleitfaser in jeder Wickellage präzise nebeneinander gelegt; Überkreuzungen und Lücken zwischen den einzelnen Faserwindungen sind durch eine sehr genaue und vergleichsweise teure Wickeltechnik zu vermeiden. Andere Lösungsansätze, wie sie beispielsweise in EP O 694 760 und US 5,546,482 beschrieben sind, verlangen eine Einbettung jeder Wickellage in ein elastisches Puffermaterial.

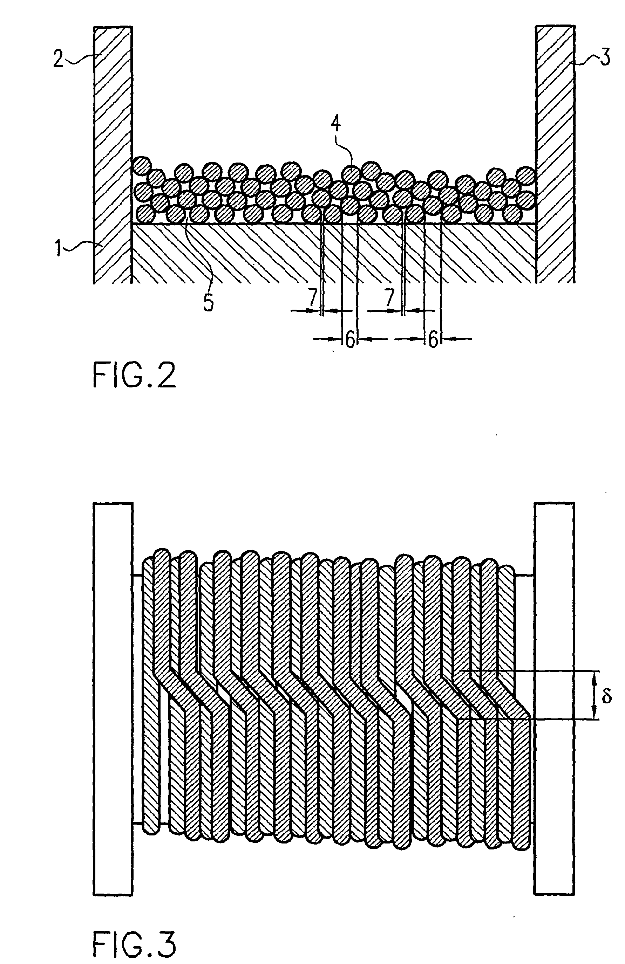

Bei diesen bekannten Verfahren zur Reduzierung der durch den Shupe-Effekt verursachten nichtreziproken Veränderungen des Lichtwegs ergeben sich jedoch nach wie vor grundsätzliche systembedingte Probleme: Die Steigung der Lichtleitfaser von Windung zu Windung erfolgt ab der zweiten Wickellage nicht in einer gleichmäßigen Spirale. Die Fasern legen sich in die von der darunterliegenden Lage gebildeten Nuten. Da die Steigung von Lage zu Lage ihre Richtung wechselt, muss pro Umdrehung eine Überkreuzung stattfinden. Der Ort dieser Überkreuzungen ist stufenförmig auf einen engen Raum begrenzt. Wie sich aus der schematischen Darstellung der Figur 3 der beigefügten Zeichnung ergibt, liegt der Überkreuzungsbereich aller Windungen einer Lage insbesondere bei erwünschter enger Lagenwicklung in einem kleinen Winkelsegment δ. Die hohen Anforderungen an die Präzision der Spulenwicklung bedingen aufwendige Wickelverfahren und entsprechend teure Wickelanlagen. Dabei muss vor allem berücksichtigt werden, dass die als Lichtleiter verwendete Glasfaser aufgrund ihrer Materialeigenschaften eine inhärente elastische Spannung aufweist, die bestrebt ist, die Faser in eine bevorzugte, in der Regel gestreckte Lage zu bringen. Biege- oder Torsionsspannungen innerhalb der Faser können zu einer wellenförmigen Lage der Faser auf einem Wickelkörper führen. Diese Welligkeit kann wiederum zu Überkreuzungen oder Lücken zwischen den Windungen innerhalb einer Lage führen. Für eine automatische Wicklung bedeuten diese Risiken einen hohen maschinellen Aufwand und hohe Fachkenntnis und Geschicklichkeit des Fertigungspersonals, wenn derartige Störungen vermieden werden sollen.

Zur Verminderung von Nichtreziprozitätsfehlern aufgrund des Shupe-Effekts ist aus DE 36 32 730 C2 auch schon der Vorschlag bekannt, Biegeverluste an Überkreuzungen dadurch zu vermeiden, dass eine nur einlagige Wicklung vorgesehen wird, die Windungen regellos verteilt bzw. vermischt und sodann mit einem Kleber in einem bestimmten Volumen fixiert werden mit nachfolgender Entfernung des Wickelkerns. Abgesehen davon, dass diese Art von Wickeltechnik unvermeidlicherweise zu räumlich großen Spulen führt, haben Untersuchungen gezeigt, dass die Vermeidung von Biegeverlusten zwar zu einer Verbesserung nichtreziproker Phasenfehler führt, jedoch das Shupe-Effekt-Problem nicht beseitigen kann.

Geht man gemäß einem Vorschlag von Dyott den umgekehrten Weg und randomisiert die Windungen nicht nur in axialer, sondern auch in radialer Richtung, so zeigt das Wickelmuster keine Lagenwicklung mehr und es muss, um eine räumlich kleine Spule zu erzielen, die Faserwickelscheibe mit einem Fixierungsmittel zusammengehalten werden, zumindest dann, wenn gemäß dem Vorschlag von Dyott auf einen Spulenkörper verzichtet werden soll (vergleiche R.B. Dyott: Reduction of the Shupe effect in fiberoptic gyros; the random-wound coil, Electronics Letters, 7. November 1996, Band 32, Nr. 23, Seite 2177 und 2178).

Obgleich verfahrensmäßig relativ leicht herstellbar, lässt sich mit dieser durch Zufallsverteilung aufgebrachten Wicklung gegenüber der Quadrupol-Wickeltechnik, wie sie heute in den oben erwähnten verschiedenen Verfahrensvarianten angewendet wird, keine ausreichende Verbesserung der Nullpunktdrift bei Faserkreiseln erzielen, die aufgrund vorgegebener Spezifikation in einem Temperaturbereich von beispielsweise -55 °C bis +80 °C mit hoher Genauigkeit betrieben werden sollen.

Der Erfindung liegt daher die Aufgabe zugrunde, Lichtleitfaserspulen für faseroptische Sagnac-Interferometer und ein Verfahren zu deren Herstellung bereitzustellen, die sich durch überragende Nullpunktdriftfreiheit innerhalb vorgegebener Temperaturgrenzen und Temperaturänderungsgeschwindigkeiten auszeichnen.

Die Erfindung ist bei einem Verfahren zur Herstellung einer Lichtleitfaserspule für eine faseroptische Messeinrichtung erfindungsgemäß dadurch gekennzeichnet, dass zur Reduzierung nichtreziproker Veränderungen des Lichtwegs in der Faserspule beim Wickeln derselben die Lichtleitfaser auf einen Wickelkörper in einem Quadrupol-Wickelmuster in unmittelbar aufeinanderfolgenden Wickellagen so aufgebracht wird, dass die Windungen in den einzelnen Wickellagen in unregelmäßigen Abständen eine möglichst große Anzahl von Überkreuzungspunkten aufweisen.

Vorzugsweise wird die Lichtleitfaserspule so gewickelt, dass die in der Regel ungleichmäßigen Abstände zwischen den einzelnen Windungen im Mittel etwa einem halben Durchmesser der Lichtleitfaser entsprechen.

Eine Lichtleitfaserspule für ein faseroptisches Sagnac-Interferometer ist weiterhin gemäß der Erfindung gekennzeichnet durch einen Wickelkörper, auf den die Lichtleitfaser in unmittelbar aufeinanderfolgenden Wickellagen in einem Quadrupol-Wickelmuster mit einer Mehrzahl von unregelmäßig beabstandeten Überkreuzungspunkten in den einzelnen Wickellagen aufgebracht ist.

Vorzugsweise weisen die Windungen innerhalb jeder Wickellage variable Abstände auf, jedoch so, dass diese Abstände gemittelt über eine gesamte Wickellage etwa einem halben Durchmesser der Lichtleitfaser entsprechen. Auf ein Fixier- und/oder Puffermittel kann verzichtet werden, da dadurch keine weitere Verbesserung des Temperatur- und Kreuzkopplungsverhaltens erreicht wird.

Detaillierte Untersuchungen der Einflussfaktoren Zugspannung, Anordnung von Zwischenlagen eines Puffer- oder Fixiermittels zwischen den Wickellagen und Anzahl der auftretenden Faserüberkreuzungen auf die Temperaturtransientenempfindlichkeit und die Polarisationskreuzkopplung, insbesondere bei polarisationserhaltenden Lichtleitfasern, hat schließlich zu der mit der Erfindung realisierten optimalen Lösung geführt.

Vor allem zeichnet sich das erfindungsgemäße Verfahren dadurch aus, dass - im Gegensatz zu den bisherigen Annahmen und Voraussetzungen der Quadrupol-Wickeltechnik - bei einer großen Anzahl von Überkreuzungen der Lichtleitfaser die Temperaturtransientenempfindlichkeit in Richtung zu wesentlich kleineren nichtreziproken Phasenverschiebungen deutlich besser wird. Erfindungsgemäß wird die Wicklung dabei so gestaltet, dass der Bereich, in welchem die Überkreuzungen stattfinden, nicht auf einen kleinen Winkelbereich der Spule begrenzt ist, vielmehr die Orte der Überkreuzungen über den ganzen Umfang der Spule verteilt werden. Weiterhin wurde als für die Erfindung charakteristisch festgestellt, dass die Faktoren Zugspannung und Pufferlage, die bisher als signifikante Einflussgrößen angesehen wurden, auf das erzielte günstige Ergebnis von geringer Bedeutung sind. Wird insbesondere die beim Wickeln angewendete Zugspannung in einem Bereich von etwa 10 cN bis etwa 20 cN gehalten, so ändert sich die Polarisationskreuzkopplung zwischen den Polarisationseigenmoden der Lichtleitfaser nicht signifikant durch Hinzufügen oder Weglassen von elastischen Pufferlagen zwischen den einzelnen Faserlagen. Der Faktor Überkreuzungen ist hierfür von vergleichsweise geringer Bedeutung.

Wichtig für die erfindungsgemäße Lehre ist, dass Fixier- und/oder Puffermittel nicht erforderlich sind, da sie das angestrebte Ergebnis nicht verbessern. Allerdings verschlechtern sie es auch nicht. Beobachtet wurde lediglich, dass in der Kombination mit hoher Zugspannung, also außerhalb des zuvor genannten Bereichs von etwa 10 bis 20 cN eine Verschlechterung der Polarisationskreuzkopplung auftreten kann, wenn ohne Kleber gearbeitet wird.

Hinsichtlich des Verfahrens zum Herstellen von Lichtleitfaserspulen mit den gewünschten Eigenschaften wird die gestellte Aufgabe erfingdungsgemäß mit folgenden fertigungstechnisch einfach zu realisierenden Wickelverfahren gelöst: Es wird ein Wickelkörper bereitgestellt, der an beiden axialen Enden einen Flansch aufweist. Das unter anderem aus der oben angegebenen Literatur bekannte Quadrupol-Wickelmuster wird zugrunde gelegt. Dabei wird die gesamte Länge der Faser, die auf eine Sensorspule zu wickeln ist, zunächst auf eine Vorratsspule gewickelt. Die Hälfte der Faserlänge wird nun von der einen Vorratsspule auf eine zweite Vorratsspule abgewickelt. Sodann wird die Sensorspule von der Mitte der Gesamtfaserlänge aus gewickelt. Dabei wird zuerst eine Lage von der ersten Vorratsspule und sodann eine Doppellage von der zweiten Vorratsspule aus aufgewickelt. Abwechselnd werden nun Doppellagen von der ersten bzw. zweiten Vorratsspule auf die herzustellende Sensorspule gewickelt, bis die gesamte auf den Vorratsspulen befindliche Fasermenge aufgebraucht ist. Zum Erzeugen von vielen unregelmäßigen Faserüberkreuzungen wird die Steigung der Wicklung so eingestellt, dass zwischen zwei Windungen jeweils eine Spalte von etwa 50 % des Faserdurchmessers entsteht. Eine gewisse Welligkeit der Faser führt zu variablem Abstand zwischen benachbarten Windungen, jedoch so, dass über eine Wickellage die Abstände im Mittel etwa einem halben Durchmesser der Lichtleitfaser entsprechen. Beim Wickeln wird die Faser nicht durch eine bisher verwendete Zwangsführung in eine vorgegebene Position gezwungen. Die Windungen einer darüberliegenden Lage fallen in die so gebildete Spalte. Die Positionen der Windungen der darunter befindlichen Lage können dabei verschoben werden, wodurch die Spaltabstände variabel oder unregelmäßig werden. Ab der dritten Lage wird das so entstehende Muster regellos. Es treten unregelmäßige Überkreuzungen auf. Gemäß der Erfindung sind Fixierungs- oder Puffermittel zur Trennung der Wickellagen nicht erforderlich. Die dadurch erreichte engere gegenseitige Durchdringung der Wickellagen führt zu einer gleichmäßigeren Wärmeverteilung von jeweils gleich weit vom Mittelpunkt der Spule entfernten Faserabschnitten.

Für das erfindungsgemäße Verfahren benötigt man auf einem herkömmlichen Wickelautomaten keine Vorrichtung zum Auftragen und zum Aushärten eines Fixiermittels. Eine exakte Kontrolle der einzelnen Faserpositionen kann ebenso entfallen. Die bisher unvermeidliche Komplexität der für die Herstellung solcher Faserspulen erforderlichen Wickelmaschinen läßt sich drastisch reduzieren.

Die Erfindung und vorteilhafte Einzelheiten werden nachfolgend unter Bezug auf die Zeichnung in beispielsweiser Ausführungsform näher erläutert. Es zeigen:
- **Fig. 1**: einen Wickelkörper mit Windungen eines Lichtwellenleiters;
- **Fig. 2**: einen Schnitt durch die Mittenebene einer Spule mit Wickelkörper; und
- **Fig. 3**: eine bekannte Lichtleitfaserspule, bei welcher die Überkreuzung von gegenläufig gewickelten Lagen in einem engen Wickelbereich liegen, wenn eine enge Lagenwicklung angewendet wird.

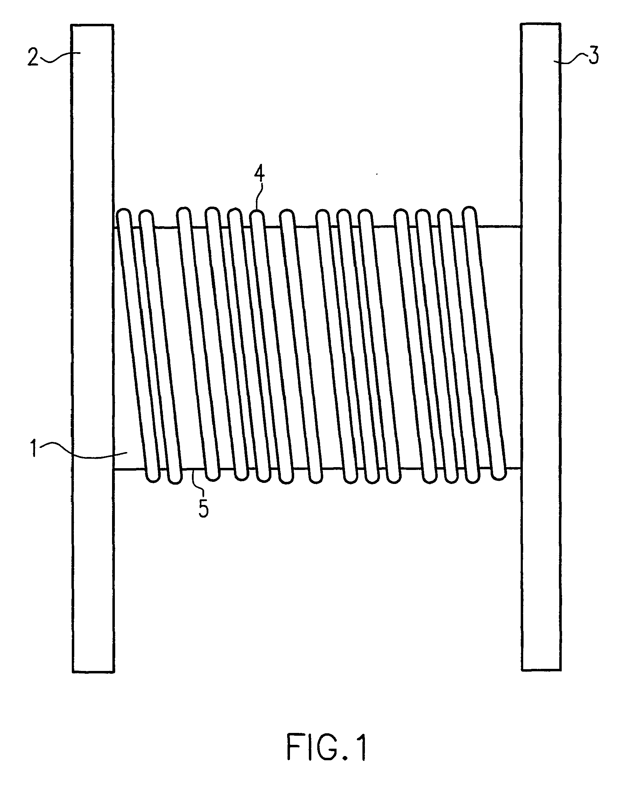

Fig. 1 veranschaulicht einen Wickelkörper 1 mit endseitigen Flanschen 2 und 3. Auf dem Wickelkörper 1 sind Windungen einer Lichtleitfaser 4 aufgebracht, wobei die dargestellten Windungen der untersten Lage einen deutlichen Abstand voneinander aufweisen. Wie die Fig. 2 erkennen läßt, kommen die Windungen einer zweiten Lage der Lichtleitfaser 4 in den Zwischenräumen 5 der ersten Lage zu liegen. Dabei werden an verschiedenen durch Hinweiszeichen 6 verdeutlichten Stellen die Windungen der unteren Lage so verschoben, dass sich die Zwischenräume vergrößern. Dadurch wiederum verkleinert sich der Zwischenraum zu jeweils benachbarten Windungen 7. Ab der dritten Lage entsteht eine Mantelfläche der Gesamtwicklung, die sich als unregelmäßige Wickelform charakterisieren lässt.

Wichtig für die Erfindung ist, dass die kombinierte Anwendung eines Quadrupol-Wickelmusters unter Verwendung eines Spulenkörpers und das Aufbringen der Windungen in Wickellagen in unregelmäßigen Abständen mit möglichst vielen Überkreuzungspunkten, und zwar ohne die Verwendung von Fixierungs- oder Puffermitteln, in dieser Gesamtheit zu einer sehr deutlichen Verringerung der durch den Shupe-Effekt verursachten nichtreziproken Phasenschiebungen bzw. Nullpunktverschiebungen eines mit einer solchen Faserspule ausgestatteten Interferometers führt.

## Patentansprüche

1. Verfahren zur Herstellung einer Lichtleitfaserspule für eine faseroptische Messeinrichtung, **dadurch gekennzeichnet, dass** zur Reduzierung nichtreziproker Veränderungen des Lichtwegs in der Faserspule beim Wickeln derselben die Lichtleitfaser auf einen Wickelkörper in einem Quadrupol-Wickelmuster in unmittelbar aufeinanderfolgenden Wickellagen so aufgebracht wird, dass die Windungen in den einzelnen Wickellagen in unregelmäßigen Abständen eine möglichst große Anzahl von Überkreuzungspunkten aufweisen.

2. Verfahren nach Anspruch 1, **dadurch gekennzeichnet, dass** die Lichtleitfaser in jeder Wickellage so gewickelt wird, dass die in der Regel ungleichmäßigen Abstände zwischen den einzelnen Windungen im Mittel etwa einem halben Durchmesser der Lichtleitfaser entsprechen.

3. Lichtleitfaserspule eines faseroptischen Sagnac-Interferometers **gekennzeichnet durch** einen Wickelkörper (1), auf den die Lichtleitfaser (4) in unmittelbar aufeinanderfolgenden Wickellagen in einem Quadrupol-Wickelmuster mit einer Mehrzahl von unregelmäßig beabstandeten Überkreuzungspunkten in den einzelnen Wickellagen aufgebracht ist.

4. Lichtleitfaserspule nach Anspruch 3, **dadurch gekennzeichnet, dass** variable Abstände zwischen den Windungen in jeder Wickellage vorhanden sind, wobei diese Abstände im Mittel jedoch einem halben Durchmesser der Lichtleitfaser entsprechen.

5. Lichtleitfaserspule nach Anspruch 3 oder 4, **dadurch gekennzeichnet, dass** die erste Lage von Windungen der Lichtleitfaser (4) unmittelbar und ohne Fixier- oder Puffermittel auf den Wickelkörper (1) aufgebracht ist.

6. Lichtleitfaserspule nach Anspruch 3 oder 4, **dadurch gekennzeichnet, dass** ein Fixier- oder Puffermittel zwischen den Wickellagen vorhanden ist.

## Claims

1. A method for producing an optical fiber coil for a fiber-optic measuring device, **characterized in that**, in order to reduce nonreciprocal variations in the light path in the fiber coil during winding of the same, the optical fiber is applied to a winding body in a quadrupole winding pattern in directly successive winding layers such that the turns in the individual winding layers have, at irregular spacings, as large a number of crossover points as possible.

2. The method as claimed in claim 1, **characterized in that** the optical fiber is wound in each winding layer such that the generally irregular spacings between the individual turns correspond on average approximately to half the diameter of the optical fiber.

3. An optical fiber coil of a fiber-optic Sagnac interferometer, **characterized by** a winding body (1) to which the optical fiber (4) is applied in directly successive winding layers in a quadrupole winding pattern with a plurality of irregularly spaced crossover points in the individual winding layers.

4. The optical fiber coil as claimed in claim 3, **characterized in that** variable spacings between the turns are present in each winding layer, these spacings corresponding on average, however, to half the diameter of the optical fiber.

5. The optical fiber coil as claimed in claim 3 or 4, **characterized in that** the first layer of turns of the optical fiber (4) is applied to the winding body (1) directly and without fixing or buffer means.

6. The optical fiber coil as claimed in claim 3 or 4, **characterized in that** a fixing or buffer means is present between the winding layers.

## Revendications

1. Procédé de fabrication d'une bobine de fibre optique pour un dispositif de mesure à fibre optique, **caractérisé en ce que**, en vue de la réduction de modifications non réciproques du trajet lumineux dans la bobine de fibre lors de l'enroulement de celle-ci, la fibre optique est disposée sur un corps de bobine en une configuration d'enroulement quadripolaire dans des couches d'enroulement immédiatement successives de sorte que les spires présentent le plus grand nombre possible de points d'intersection dans les différentes couches d'enroulement à des distances irrégulières.

2. Procédé selon la revendication 1, **caractérisé en ce que** la fibre optique est enroulée dans chaque couche d'enroulement de sorte que les distances inégales en règle générale entre les différentes spires correspondent en moyenne à un demi diamètre de la fibre optique.

3. Bobine de fibre optique d'un interféromètre de Sagnac à fibre optique **caractérisée par** un corps d'enroulement (1), sur lequel la fibre optique (4) est disposée dans des couches d'enroulement immédiatement successives en une configuration d'enroulement quadripolaire avec une pluralité de points d'intersection irrégulièrement espacés dans les différentes couches d'enroulement.

4. Bobine de fibre optique selon la revendication 3, **caractérisée en ce que** des distances variables entre les spires sont présentes dans chaque couche d'enroulement, où ces distances correspondent en moyenne à un demi diamètre de la fibre optique.

5. Bobine de fibre optique selon la revendication 3 ou 4, **caractérisée en ce que** la première position des spires de la fibre optique (4) est disposée immédiatement et sans moyens de fixation ou moyens tampons sur le corps d'enroulement (1).

6. Bobine de fibre optique selon la revendication 3 ou 4, **caractérisée en ce qu'**un moyen de fixation ou un moyen de tampon est présent entre les couches d'enroulement.
